Europäisches Patentamt

European Patent Office

Office européen des brevets

(11) Publication number: **0 148 611**
**B1**

(12) EUROPEAN PATENT SPECIFICATION

(45) Date of publication of patent specification: **31.10.90**

(21) Application number: **84308761.0**

(22) Date of filing: **14.12.84**

(51) Int. Cl.⁵: **B 29 C 39/10** // B29K83:00, B29K105:24

(54) Method for manufacturing printed moldings.

(30) Priority: **20.12.83 JP 238751/83**

(43) Date of publication of application:
**17.07.85 Bulletin 85/29**

(45) Publication of the grant of the patent:
**31.10.90 Bulletin 90/44**

(84) Designated Contracting States:
**BE DE FR GB IT NL**

(56) References cited:
**DE-A-3 046 832**
**DE-A-3 218 404**
**US-A-3 681 723**

(73) Proprietor: Toray Silicone Company Limited
Mitsui Building No. 6 2-8 Nihonbashi-
Muromachi
Chuo-ku Tokyo 103 (JP)

(72) Inventor: Shimizu, Koji
4-25-14 Aobadai
Ichihara-shi Chiba-ken (JP)
Inventor: Hamada, Mitsuo
3-5-17 Okobo
Kisarazu-shi Chiba-ken (JP)
Inventor: Takami, Makoto
1-6, Yushudainishi
Ichihara-shi Chiba-ken (JP)

(74) Representative: Laredo, Jack Joseph et al
Elkington and Fife Beacon House 113 Kingsway
London, WC2B 6PP (GB)

Courier Press, Leamington Spa, England.

EP 0 148 611 B1

## Description

The present invention relates to a method for manufacturing a molded article having information imprinted thereon, according to the first part of claim 1. Such a method is known from DE—A—3046832.

Methods for manufacturing printed molded articles during which characters, figures, symbols, pictures or other information are printed during molding of a plastic article have been disclosed, for example, in Japanese Laid-Open Patent Application 57-59738 [82-59738]. Because molding and printing are executed simultaneously, these methods for manufacturing printed molded articles are characterized by a high rate of productivity; however, the durability of adhesion and the legibility of the information printed on the molding surface of the article are inadequate.

Japanese Laid-Open Patent Application 57-59738 [82-59738] discloses a method during which molding material is poured into a mold and cured after a film printed with a conventional ink has been placed in the mold. The drawback of this method is that the durability of adhesion of the transferred ink is not always good. When an uncured ink is printed on the film before the molding material is poured in and subsequently cured in order to solve this problem, the printed information fades or dims and becomes unclear.

Specifically, DE—A—3046832 describes a method and apparatus for embossing plaques or the like in which the colour coating on a colour substrate film is transferred to optimally raised embossed parts of a plastics substrate body by introduction of the colour substrate film into the mold during the manufacture of the plastics substrate by injection molding, blow molding or extrusion molding, whereby the colour coating of the colour substrate is melted into the hot soft front surface of the substrate body.

The goal of the present invention is to solve the foregoing problems by providing a method for manufacturing printed molded articles wherein the ink printed on the surface of the article has both a high durability of adhesion and high legibility.

To achieve the foregoing goal, the method for manufacturing printed molded articles disclosed in DE—A—3 046 832 in the present invention is characterised in that:

said ink is heat curable or room temperature curable and is at least partially cured before said release sheet is placed in said mold; said moldable material to be printed within said mold cavity is a curable material and said curable material is concurrently cured and bonded to said ink to form said printed molded article.

As used herein, the term "at least partially cured" refers to either a semi-cured state or a completely cured state. From the viewpoint of improving the durability of adhesion of the ink to the cured material, the ink is preferably only partially cured prior to placing the release sheet in the mold.

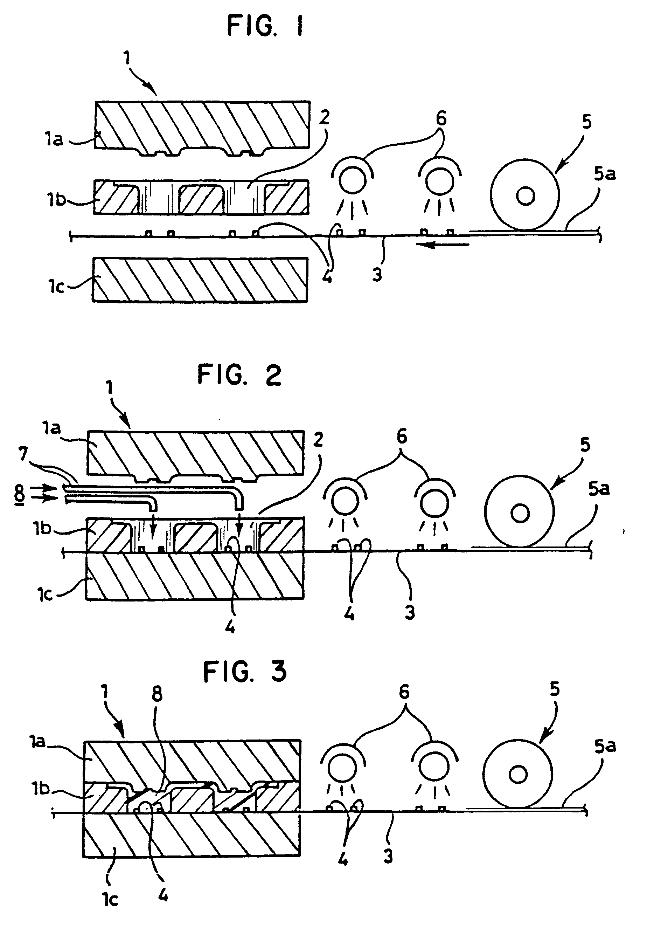

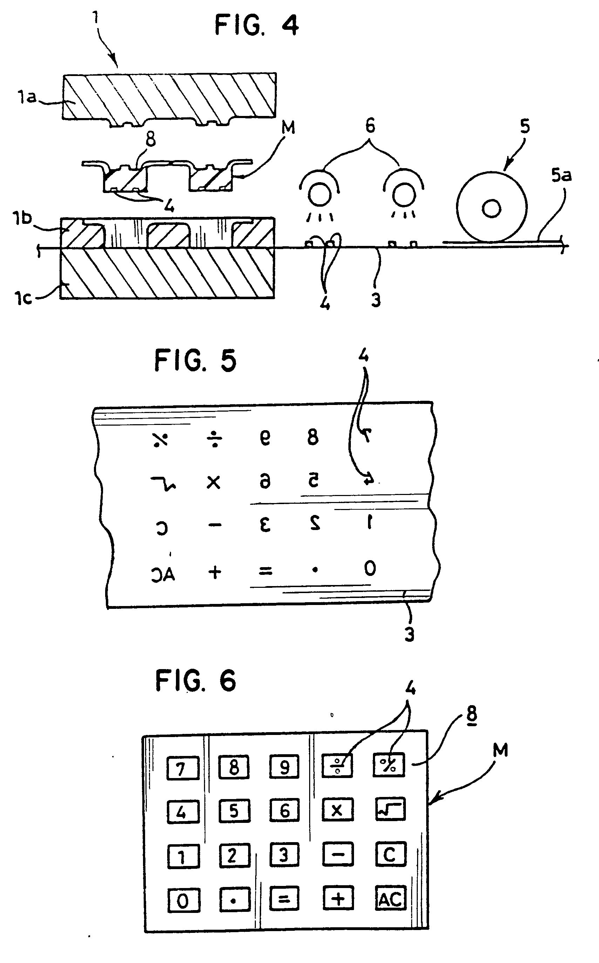

Figures 1, 2, 3, and 4 depict the stages of a continuous process for preparing printed, molded articles in accordance with the present method. The mold and final article are shown in cross section. Figure 5 is a top view of a printed release sheet bearing a mirror image of the information to be transferred during the present molding method. Figure 6 is a top view of the final molded article, in this case a key top, bearing the information transferred from the release sheet of Figure 5.

The curable ink can be either of a room temperature-curable or heat-curable type. From the viewpoint of increased productivity, a heat-curable type is preferred. Polymers used in heat-curable inks include silicone elastomers, silicone resins, epoxy resins and amino resins. Preferred silicone inks cure by an addition reaction, a condensation reaction or in the presence of organoperoxides.

The curable material from which the molded article is formed can be either a room temperature-curable or heat-curable composition. Heat-curable compositions are preferred. Examples of room temperature-curable materials are elastomers such as silicones, polysulfides and polyurethanes. Heat-curable materials include elastomers such as silicone rubber, natural rubber, butyl rubber, SBR, chloroprene, EPDM, acrylic rubber, polybutadiene rubber, polyurethane rubber and fluorinated rubbers. Heat-curable materials also include resins such as silicone resins, epoxy resins, amino resins, phenolic resins, unsaturated polyester resins and polyurethane resins. Organoperoxide-curable or addition reaction-curable silicone materials are preferred.

The release sheet must be capable of transferring the ink to the molded article. Preferred examples of such release sheets are plastic films, plastic-laminated papers, and plastic-laminated metal foils. Preferred plastic films are formed from polytetrafluoroethylene, polyesters, polypropylene, polyethylene, vinylidene chloride or vinyl chloride coolymers. Preferred plastic-laminated papers are paper laminated with polyethylene, polypropylene or polyesters. Preferred plastic-laminated metal foils include polyethylene-laminated aluminum foil, polypropylene-laminated aluminum foil and polyester-lainated aluminum foil.

The metal mold is divided at least into upper and lower sections. Mold cavities are present in the lower section. Because the release sheet printed with the curable ink is placed on the bottom of the mold cavities, the metal mold is preferably constructed so as to facilitate placement of the release sheet. As will be discussed below, such a metal mold is preferably divided to give a lower section which contains mold cavities. The lower section can, in turn, be separated at the bottom of the mold cavities. By dividing the metal mold to provide access to the bottom of the mold cavities, the release sheet can be readily put in place and the entire molding operation can be easily automated.

The curable ink can be printed onto the release sheet by any known method. Screen printing is particularly preferred. Before placing the release sheet at the bottom of the mold cavities, the curable ink printed on the release sheet must be at least partially cured. Preferably the ink is only partially cured at this stage. Curing of the ink is completed while it is in contact with the curable material in the mold cavity, and the curable material and curable ink become a single body.

The cured ink is readily released from the release sheet and smoothly transferred to the molded articles. Because the ink is at least partially cured before being placed in the mold, the printed information is not altered when the pumpable curable material is placed in the mold cavities. Thus, a legible, strong printing is obtained without blurring.

The preferred embodiments of the present method are described in the following practical examples with reference to the accompanying drawings.

Figures 1 to 4 depict the steps in a continuous method for manufacturing printed moldings in accordance with the present invention.

In the figures, metal mold 1 is divided into three sections: 1a represents a single upper metal mold section while sections 1b and 1c constitute the lower portion of the mold. Vertically oriented mold cavities 2 are present in lower metal mold section 1b, which constitutes the central section of the mold. Release sheet 3, on which information has been printed using curable ink 4, is inserted between mold sections 1b and 1c. The side of the release sheet bearing curable ink 4 is positioned so as to face upwards when the release sheet is held between mold sections 1b and 1c. The curable ink 4 is applied to the release sheet 3 using a screen printer 5. A screen 5a containing the characters to be printed is present between the screen printer 5 and the release sheet 3. The liquid curable ink 4 is printed through this screen. A heater 6 partially cures the printed liquid curable ink 4.

In the case of a calculator keyboard, a release sheet is imprinted with the mirror-image characters shown in Figure 5. The printed curable ink 4 is only partially cured prior to insertion of the release sheet between separated lower metal mold sections 1b and 1c of metal mold 1. During insertion of the sheet, the partially cured ink 4 is positioned so as to face the bottom openings of the mold cavities 2.

Next, as shown in Figure 2, while the forward advance of release sheet 3 is stopped, lower mold sections 1b and 1c are tightly closed to secure the release sheet. Liquid curable material 8 is then dispensed from supply pipes 7 into mold cavities 2. Differently coloured curable materials may be provided to the several mold cavities.

After the liquid curable material 8 has been dispensed into mold cavities 2, the upper metal mold section 1a is closed tightly against lower metal mold section 1b as shown in Figure 3, in order to assemble the whole metal mold into a single piece and perform the heat curing process. During the curing process, curable material 8 and curable ink 4 are simultaneously cured and adhered to one another to yield a unitary, printed molded article M, shown in Figure 4.

Upon completion of the curing process, metal mold 1 is again separated as shown in Figure 4 and molded article M is removed from mold cavities 2. The release sheet is easily peeled from the cured ink that is now adhered to the molded article. Figure 6 shows molded article M, a printed key top, following removal from the metal mold. The cured ink 4 cannot be readily peeled from the article and the printed characters are distinct and unblurred.

Besides the printed calculator key top shown in Figure 6, the present invention can also be applied to the simultaneous molding and printing of various items such as telephone pushbuttons, packings, O-rings, end caps, anode caps, connectors, spark plug boots and rubber plugs.

As described hereinbefore, the method for manufacturing printed molded articles of the present invention comprises the placing of a release sheet, printed with a curable ink which has been at least semi-cured, on the bottom of the mold cavities. When pumpable curable material is dispensed into the mold, the shape of the partially cured ink is not altered by the weight of the curable material. The ink and curable material are tightly solidified into a unitary article during the preferred simultaneous curing operation. Accordingly, the curable ink is strongly adhered to the cured article and a legible, unblurred and nondimming printing is made possible.

Example 1

A black condensation reaction-curing silicone ink was printed on a polyester film release sheet. The sheet was heated at 200°C for 5 minutes to partially cure the silicone ink. The release sheet was placed between the two separated lower metal mold sections of a three-section metal mold for molding key tops as shown in Figure 1. A white two-component addition reaction curing silicone eleastomer composition (viscosity=700 Pa.s) was poured into the mold cavities and the entire metal mold was tightly closed. Curing was carried out for 40 seconds at 150°C.

The printed and transferred characters on the key top moldings were distinct and legible. The durability of adhesion was considered excellent and no peeling was observed following repeated folding.

Example 2

A white addition reaction-curing silicone ink was printed on a polyester film release sheet and the silicone ink was partially cured at 200°C for 5 minutes. The release sheet was then inserted between the two separated lower metal mold sections of a three-section metal mold for molding key tops. A light gray, single-component organoperoxide-curing silicone elastomer composition (viscosity=700 Pa.s) was poured into the mold cavities and the whole metal mold was closed tightly. Curing was carried out for 90 seconds at 160°C.

The printed and transferred characters on the key top moldings were distinct and legible. The durability of adhesion was considered excellent and no peeling was observed following repeated foldings.

Example 3

A red epoxy resin ink was printed on a polypropylene-laminated paper release sheet. The ink was then partially cured at 100°C for 10 minutes. This release sheet was inserted between the two separated lower metal mold sections of a three-section metal mold for molding conectors. A black two-component polyurethane composition (viscosity=5 Pa.s) was poured into the mold cavities and the whole mold was closed tightly. Curing was conducted at 120°C for 3 hours.

The printed and transferred characters on the molded connectors were distinct and legible. The durability of adhesion was considered excellent and no peeling occurred under repeated folding and compression.

**Claims**

1. A method for manufacturing a molded article having information imprinted thereon, said method comprising the following sequence of steps:

forming a mirror image of said information on a release sheet (3) using an ink;

placing said release sheet (3) within a metal mold (1) with the ink-bearing side facing a metal mold cavity (2);

positioning a pumpable moldable material (8) to be printed within said metal mold cavity (2);

bonding together said material (8) and said ink (4) during manufacture of the molded article to form a printed molded article;

removing said printed molded article from the mold (1); and

separating said release sheet (3) from said article, characterised in that:

(i) said ink (4) is heat curable or room temperature curable and is at least partially cured before said release sheet (3) is placed in said mold (1);

(ii) said moldable material (8) to be printed within said mold cavity (2) is a curable material (8) and said curable material is concurrently cured and bonded to said ink (4) to form said printed molded article (M).

2. The method of Claim 1 where said ink (4) is only partially cured prior to placing said release sheet (3) in said mold cavity (2) and becomes completely cured during curing of said molded article.

3. The method of claim 1 where said ink (4) and said curable material (8) are heat curable.

4. The method of claim 1 where said ink (4) is a silicone elastomer that is curable by means of an addition reaction, a condensation reaction or a reaction catalyzed by organoperoxides and said curable material is a silicone elastomer that is curable by means of an addition reaction or one catalyzed by organoperoxides.

5. The method of claim 1 where said ink (4) is printed onto said release sheet (3) by screen printing, the release sheet is placed between two sections of said mold, and the curable material is poured in from the top of the mold cavity.

6. The method of claim 1 where the release sheet (3) is a plastic film, plastic-laminated paper or plastic-laminated metal foil.

7. The method of claim 1 where said mold (1) is separable into an upper mold section (1a), a central section (1b) containing said mold cavity and a lower section (1c) providing access to the bottom of said mold cavity to facilitate placement of said release sheet (3).

**Patentansprüche**

1. Verfahren zum Herstellen geformter Gengenstände mit eingedruckten Informationen, mit der folgenden Schrittfolge:

—Ausbilden eines Speigelbildes der Information auf einer Trennfolie (3) unter Verwendung einer Druckfarbe,

—Anordnen der Trennfolie (3) in einer Metallform (1) mit der druckfarbetragenden Seite zum Hohlraum (2) der Metallform,

—Anordnen des pumpfähigen, formbaren, zu bedruckenden Materials (8) in dem Hohlraum (2) der Metallform,

—Verbinden des Materials (8) mit der Druckfarbe (4) während der Herstellung des geformten Gegenstandes, um einen bedruckten, geformten Gegenstand herzustellen,

—Entfernen des bedruckten, geformten Gegenstandes aus der Form (1), und

—Abtrennen der Trennfolie (3) vom Gegenstand, dadurch gekennzeichent, daß

(i) die Druckfarbe (4) wärmehärtbar oder bei Raumtemperatur härtbar ist und mindestens teilweise gehärtet ist, ehe die Trennfolie (3) in der Form (1) angeordnet wird,

(ii) das in dem Formhohlraum (2) zu bedruckende, formbare Material (8) in härtbares Material (8) ist und das härtbare Material gleichzeitig gehärtet und mit der Druckfarbe (4) verbunden wird, um den bedruckten, geformten Gengenstand (M) auszubilden.

2. Verfahren nach Anspruch 1, dadurch gekennzeichnet, daß die Druckfarbe (4) vor dem Anordnen der Trennfolie (3) in dem Formhohlraum (2) nur teilweise gehärtet ist und während des Härtens des geformten Gegenstandes vollständig gehärtet wird.

3. Verfahren nach Anspruch 1, dadurch gekennzeichenet, daß die Druckfarbe (4) und das härtbare Material (8) wärmehärtbar sind.

4. Verfahren nach Anspruch 1, dadurch gekennzeichnet, daß die Druckfarbe (4) ein Siliconelastomer ist, das durch eine Additionsreaktion, eine Kondensationsreaktion oder eine durch Organoperoxide katalysierte Reaktion härtbar ist, und das härtbare Material ein Siliconelastomer ist, das durch Additionsreaktion oder durch eine durch Organoperoxide katalysierte Reaktion härtbar ist.

5. Verfahren nach Anspruch 1, dadurch gekennzeichnet, daß die Druckfarbe (4) mittels Siebdruck auf die Trennfolie (3) aufgedruckt wird, die Trennfolie zwischen zwei Abschnitten der Form angeordnet wird und das härtbare Material von oben in den Formhohlraum eingegossen wird.

6. Verfahren nach Anspruch 1, dadurch gekennzeichnet, daß die Trennfolie (3) eine Kunststofffolie, ein mit Kunststoff laminiertes Papier oder eine mit Kunststoff laminierte Metallfolie ist.

7. Verfahren nach Anspruch 1, dadurch gekennzeichnet, daß die Form (1) in einen oberen Formteil (1a), einen zentralen Teil (1b), der den Formhohlraum aufweist, und einen unteren Teil (1c), der einen Zugang zum Boden des Formhohlraumes schafft, um das Anordnen der Trennfolie (3) zu ermöglichen, trennbar ist.

**Revendications**

1. Un procédé pour fabriquer un article moulé sur lequel est imprimée une information, ledit procédé comprenant la séquence d'étapes suivante:

former une image spéculaire de ladite information sur une feuille de transfert (3) en utilisant une encre;

placer ladite feuille de transfert (3) dans un moule métallique (1), la face portant l'encre étant tournée vers une cavité (2) du moule métallique;

disposer une matière moulable pompable (8) devant être imprimée à l'intérieur de ladite cavité (2) du moule métallique;

lier ensemble ladite matière (8) et ladite encre (4) pendant la fabrication de l'article moulé pour former un article moulé imprimé;

retirer du moule (1) ledit article moulé imprimé; et

séparer ladite feuille de transfert (3) dudit article moulé,

caractérisé en ce que:

(i) ladite encre (4) est durcissable par la chaleur ou durcissable à la température ambiante et est au moins partiellement durcie avant que ladite feuille de transfert (3) soit placée dans ledit moule (1);

(ii) ladite matière moulable (8) devant être imprimée à l'intérieur de ladite cavité (2) du moule est une matière durcissable (8) et ladite matière durcissable est simultanément durcie et liée à ladite encre (4) pour former ledit article moulé imprimé (M).

2. Le procédé de la revendication 1, où ladite encre (4) n'est que partiellement durcie avant la mise en place de ladite feuille de transfert (3) dans ladite cavité (2) du moule et passe à l'état complètement durci pendant le durcissement dudit article moulé.

3. Le procédé de la revendication 1, où ladite encre (4) et ladite matière durcissable (8) sont durcissables par la chaleur.

4. Le procédé de la revendication 1, où ladite encre (4) est un élastomère de silicone qui est durcissable au moyen d'une réaction d'addition, d'une réaction de condensation ou d'une réaction catalysée par des peroxydes organiques, et ladite matière durcissable est un élastomère de silicone qui est durcissable au moyen d'une réaction d'addition ou d'une réaction catalysée par des peroxydes organiques.

5. Le procédé de la revendication 1, où ladite encre (4) est appliquée sur ladite feuille de transfert (3) par impression sérigraphique, la feuille de transfert est placée entre deux sections dudit moule, et la matière durcissable y est versée par le sommet de la cavité du moule.

6. Le procédé de la revendication 1, où la feuille de transfert (3) est une pellicule de matière plastique, un papier plastifié ou une feuille métallique plastifiée.

7. Le procédé de la revendication 1, où ledit moule (1) est séparable en une section de moule supérieure (1a), une section centrale (1b) contenant ladite cavité de moule, et une section inférieure (1c) donnant accès au fond de ladite cavité de moule pour faciliter la mise en place de ladite feuille de transfert (3).

EP 0 148 611 B1

FIG. 1

FIG. 2

FIG. 3

1

# FIG. 4

# FIG. 5

# FIG. 6